# EUROPEAN PATENT APPLICATION

(11) **EP 4 749 560 A1**
(43) Date of publication of application: **27.05.2026**
(21) Application number: 24845473.8
(22) Date of filing: 16.07.2024
(51) Int. Cl.: G06Q 50/06, B01D 53/62, C01B 32/50, C07B 61/00, C07C 1/04, C07C 1/22, C07C 9/04, C25B 1/50, C25B 3/20, C25B 15/02

(54) **CARBON-DIOXIDE EMISSIONS VOLUME COMPUTING DEVICE, COMPUTER PROGRAM, AND CARBON-DIOXIDE EMISSIONS VOLUME COMPUTING METHOD**

(30) Priority: 21.07.2023 JP 2023119325
(71) Applicant: GS Yuasa International Ltd., Kisshoin, Minami-ku, Kyoto-shi, Kyoto 601-8520 (JP)
(72) Inventor: HITOMI Syuji, Kyoto-shi, Kyoto 601-8520 (JP)
(74) Representative: Isarpatent
(86) International application number: PCT/JP2024/025445
(87) International publication number: WO 2025/023092

(57) **Abstract**

A carbon dioxide emission amount calculation device includes a control unit, in which the control unit acquires exhaust gas information of exhaust gas supplied to a carbon dioxide recovery unit that recovers carbon dioxide contained in the exhaust gas, specifies a first required time required for the carbon dioxide recovery unit to convert the supplied exhaust gas into a carbon dioxide concentrated gas based on the acquired exhaust gas information, and calculates a carbon dioxide emission amount required for carbon dioxide concentration based on electric power information regarding electric power supplied to the carbon dioxide recovery unit during the first required time.

## Description

### TECHNICAL FIELD

The present invention relates to a carbon dioxide emission amount calculation device, a computer program, and a carbon dioxide emission amount calculation method.

### BACKGROUND ART

Among greenhouse gases, carbon dioxide has the greatest influence on global warming. Various efforts have been made to reduce the emission amount of greenhouse gases, such as reducing carbon dioxide generated when waste is incinerated in waste incineration facilities.

Patent Document 1 discloses a methanol production system that recovers carbon dioxide from exhaust gas collected from a waste incineration facility and produces methanol using the recovered carbon dioxide.

### PRIOR ART DOCUMENTS

### PATENT DOCUMENTS

Patent Document 1: JP-A-2023-56116

### SUMMARY OF THE INVENTION

### PROBLEMS TO BE SOLVED BY THE INVENTION

In the system of Patent Document 1, it is possible to determine the extent to which carbon dioxide generated when waste is incinerated in a waste incineration facility can be reduced.

However, the amount of energy required for carbon dioxide recovery processing has not been examined. Therefore, it is not possible to accurately evaluate the impact of carbon dioxide on the environment.

One aspect of the present invention is to provide a carbon dioxide emission amount calculation device, a computer program, and a carbon dioxide emission amount calculation method that can ascertain a carbon dioxide emission amount at the time of recovering carbon dioxide from exhaust gas.

### MEANS FOR SOLVING THE PROBLEMS

A carbon dioxide emission amount calculation device according to an aspect of the present invention includes a control unit, in which the control unit acquires exhaust gas information of exhaust gas supplied to a carbon dioxide recovery unit that recovers carbon dioxide contained in the exhaust gas, specifies a first required time required for the carbon dioxide recovery unit to convert the supplied exhaust gas into a carbon dioxide concentrated gas based on the acquired exhaust gas information, and calculates a carbon dioxide emission amount required for carbon dioxide concentration based on electric power information regarding electric power supplied to the carbon dioxide recovery unit during the first required time.

### ADVANTAGES OF THE INVENTION

According to the above aspect of the carbon dioxide emission amount calculation device, it is possible to ascertain a carbon dioxide emission amount at the time of recovering carbon dioxide from exhaust gas.

### BRIEF DESCRIPTION OF THE DRAWINGS

Fig. 1 is a diagram illustrating an example of a configuration of an operation control system of a carbon compound production facility.
Fig. 2 is a diagram illustrating an example of a configuration of a carbon dioxide emission amount calculation device.
Fig. 3 is a diagram illustrating an example of electric power information.
Fig. 4 is a diagram illustrating an example of a timeline of carbon dioxide concentration and carbon compound synthesis in the case of batch treatment.
Fig. 5 is a diagram illustrating an example of a calculation method of a carbon dioxide emission amount in the case of batch treatment.
Fig. 6 is a diagram illustrating an example of a timeline of carbon dioxide concentration and carbon compound synthesis in the case of continuous treatment.
Fig. 7 is a diagram illustrating an example of a calculation method of a carbon dioxide emission amount in the case of continuous treatment.
Fig. 8 is a diagram illustrating a first example of an electrolytic cell included in a recovery unit.
Fig. 9 is a diagram illustrating a second example of an electrolytic cell included in a recovery unit.
Fig. 10 is a diagram illustrating a first example of an electrolytic cell included in a synthesis unit.
Fig. 11 is a diagram illustrating a second example of an electrolytic cell included in a synthesis unit.
Fig. 12 is a diagram illustrating an example of processing procedure by a carbon dioxide emission amount calculation device.

### MODE FOR CARRYING OUT THE INVENTION

(1) A carbon dioxide emission amount calculation device according to an embodiment of the present invention includes a control unit, in which the control unit acquires exhaust gas information of exhaust gas supplied to a carbon dioxide recovery unit that recovers carbon dioxide contained in the exhaust gas, specifies a first required time required for the carbon dioxide recovery unit to convert the supplied exhaust gas into a carbon dioxide concentrated gas based on the acquired exhaust gas information, and calculates a carbon dioxide emission amount required for carbon dioxide concentration based on electric power information regarding electric power supplied to the carbon dioxide recovery unit during the first required time.

(8) A computer program according to an embodiment of the present invention configured to cause a computer to execute processing of acquiring exhaust gas information of exhaust gas supplied to a carbon dioxide recovery unit that recovers carbon dioxide contained in the exhaust gas, specifying a first required time required for the carbon dioxide recovery unit to convert the supplied exhaust gas into a carbon dioxide concentrated gas based on the acquired exhaust gas information, and calculating a carbon dioxide emission amount required for carbon dioxide concentration based on electric power information regarding electric power supplied to the carbon dioxide recovery unit during the first required time.

(9) A carbon dioxide emission amount calculation method according to an embodiment of the present invention includes acquiring exhaust gas information of exhaust gas supplied to a carbon dioxide recovery unit that recovers carbon dioxide contained in the exhaust gas, specifying a first required time required for the carbon dioxide recovery unit to convert the supplied exhaust gas into a carbon dioxide concentrated gas based on the acquired exhaust gas information, and calculating a carbon dioxide emission amount required for carbon dioxide concentration based on electric power information regarding electric power supplied to the carbon dioxide recovery unit during the first required time.

According to a carbon dioxide emission amount calculation device, a computer program, and a carbon dioxide emission amount calculation method according to one embodiment of the present invention, based on electric power information regarding electric power supplied to a carbon dioxide recovery unit during a first required time which is required for the carbon dioxide recovery unit to convert supplied exhaust gas into a carbon dioxide concentrated gas, a carbon dioxide emission amount required for carbon dioxide concentration is calculated. The first required time can be specified based on exhaust gas information of the exhaust gas. In a case where the exhaust gas is supplied to the carbon dioxide recovery unit as single batch treatment, the first required time can be a time required for treatment of the batch (carbon dioxide recovery processing). In a case where the exhaust gas is continuously supplied to the carbon dioxide recovery unit, the first required time can be a predetermined time (for example, one hour, two hours, one day, one week, or the like). As a result, a carbon dioxide emission amount required for carbon dioxide concentration, that is, a carbon dioxide emission amount at the time of recovering carbon dioxide from exhaust gas, can be ascertained.

(2) In the carbon dioxide emission amount calculation device according to the above (1), the control unit may acquire concentrated gas information of a carbon dioxide concentrated gas converted from exhaust gas by the carbon dioxide recovery unit, and calculate a carbon dioxide emission amount required for carbon dioxide concentration based on the acquired concentrated gas information and exhaust gas information of the exhaust gas to be supplied.

According to the carbon dioxide emission amount calculation device of the above (2), a carbon dioxide emission amount required for carbon dioxide concentration is calculated based on exhaust gas information of exhaust gas supplied to the carbon dioxide recovery unit and concentrated gas information of a carbon dioxide concentrated gas converted from the exhaust gas by the carbon dioxide recovery unit. The exhaust gas information includes a composition of the exhaust gas (such as carbon dioxide, oxygen, nitrogen, or the like), a concentration of each component (for example, an average concentration), a molar ratio of each component, a flow rate (for example, an average flow rate), and the like. The concentrated gas information includes a carbon dioxide concentration (for example, an average concentration) and a flow rate (for example, an average flow rate), and the like. As a result, a carbon dioxide emission amount required for carbon dioxide concentration, that is, carbon dioxide amounts contained respectively in the exhaust gas and in the carbon dioxide concentrated gas, can be known, and therefore a carbon dioxide emission amount at the time of recovering carbon dioxide from the exhaust gas can be accurately ascertained.

(3) In the carbon dioxide emission amount calculation device according to the above (1) or (2), the exhaust gas information and the concentrated gas information each may include a gas concentration and a gas flow rate, and the control unit may calculate a first carbon dioxide amount contained in the supplied exhaust gas based on the exhaust gas information, calculate a second carbon dioxide amount contained in the carbon dioxide concentrated gas based on the concentrated gas information, and calculate a carbon dioxide emission amount required for carbon dioxide concentration based on the calculated first carbon dioxide amount and second carbon dioxide amount.

According to the carbon dioxide emission amount calculation device of the above (3), a first carbon dioxide amount contained in the exhaust gas is calculated, a second carbon dioxide amount contained in the carbon dioxide concentrated gas is calculated, and a carbon dioxide emission amount required for carbon dioxide concentration is calculated based on the calculated first carbon dioxide amount and second carbon dioxide amount. In a case where the first carbon dioxide amount > the second carbon dioxide amount, the difference (the first carbon dioxide amount - the second carbon dioxide amount) may be added as a carbon dioxide emission amount required for carbon dioxide concentration. As a result, a carbon dioxide emission amount at the time of recovering carbon dioxide from the exhaust gas can be accurately ascertained.

(4) In the carbon dioxide emission amount calculation device according to any one of the above (1) to (3), the electric power information may include a ratio of carbon dioxide emission amount to supplied electric power amount for each type of power supply source, or a power supply amount for each power supply source to the carbon dioxide recovery unit or a carbon compound synthesis unit during a predetermined period of time.

According to the carbon dioxide emission amount calculation device of the above (4), a carbon dioxide emission amount can be calculated based on an electric power amount supplied to the carbon dioxide recovery unit for operating the carbon dioxide recovery unit and a type of power supply source. When a ratio of the carbon dioxide emission amount to the supplied electric power amount for a power supply source P1 is represented as R1, and a supplied electric power amount W1 from the power supply source P1 is supplied to the carbon dioxide recovery unit, the carbon dioxide emission amount can be calculated as W1 × R1. As a result, even in a case where a plurality of types of electric power is used for recovering carbon dioxide, a carbon dioxide emission amount at the time of recovering carbon dioxide from the exhaust gas can be accurately ascertained.

(5) In the carbon dioxide emission amount calculation device according to any one of the above (1) to (4), the control unit may acquire concentrated gas information of a carbon dioxide concentrated gas supplied to a carbon compound synthesis unit that synthesizes a carbon compound, specify a second required time that is required for the carbon compound synthesis unit to convert the supplied carbon dioxide concentrated gas into a carbon compound based on the acquired concentrated gas information, and calculate a carbon dioxide emission amount required for carbon compound synthesis based on electric power information regarding electric power supplied to the carbon compound synthesis unit during the second required time.

According to the carbon dioxide emission amount calculation device of the above (5), a carbon dioxide emission amount required for carbon compound synthesis is calculated based on electric power information regarding electric power supplied to a carbon compound synthesis unit during a second required time required for the carbon compound synthesis unit to convert the supplied carbon dioxide concentrated gas into a carbon compound. In a case where the exhaust gas is supplied to the carbon dioxide recovery unit as single batch treatment, and the carbon dioxide concentrated gas output from the carbon dioxide recovery unit is supplied to the carbon compound synthesis unit, the second required time may be a time required for treatment of the batch (synthesis of the carbon compound). In a case where the exhaust gas is continuously supplied to the carbon dioxide recovery unit, and the carbon dioxide concentrated gas output from the carbon dioxide recovery unit is supplied to the carbon compound synthesis unit, the second required time can be a predetermined time (for example, one hour, two hours, one day, or one week). As a result, a carbon dioxide emission amount required for carbon compound synthesis can be ascertained.

(6) In the carbon dioxide emission amount calculation device according to the above (5), the electric power information regarding electric power supplied to the carbon compound synthesis unit during the second required time may include a ratio of carbon dioxide emission amount to a supplied electric power amount for each type of a power supply source.

According to the carbon dioxide emission amount calculation device of the above (6), a carbon dioxide emission amount can be calculated based on an electric power amount supplied to the carbon compound synthesis unit for operating the carbon compound synthesis unit and a type of power supply source. When a ratio of the carbon dioxide emission amount to the supplied electric power amount for a power supply source P1 is represented as R1, and a supplied electric power amount W1 from the power supply source P1 is supplied to the carbon compound synthesis unit, the carbon dioxide emission amount can be calculated as W1 × R1. As a result, even in a case where a plurality of types of electric power is used for carbon compound synthesis, a carbon dioxide emission amount required for carbon compound synthesis can be ascertained.

(7) The carbon dioxide emission amount calculation device according to above (5) or (6) may include a first storage unit that stores exhaust gas information of exhaust gas supplied to the carbon dioxide recovery unit and concentrated gas information of a carbon dioxide concentrated gas supplied to a carbon compound synthesis unit that synthesizes a carbon compound in association with each other, and a second storage unit that stores electric power information including a ratio of a carbon dioxide emission amount to a supplied electric power amount for each type of a power supply source, in which the control unit may acquire at least one of a selection of a type of a power supply source during a first required time that is required for the carbon dioxide recovery unit to convert the supplied exhaust gas into a carbon dioxide concentrated gas and a selection of a type of a power supply source during a second required time that is required for the carbon compound synthesis unit to convert the supplied carbon dioxide concentrated gas into a carbon compound, and calculate a carbon dioxide emission amount required for at least one of carbon dioxide concentration and carbon compound synthesis based on the type of the selected power supply source.

According to the carbon dioxide emission amount calculation device of the above (7), the association between the exhaust gas information and the concentrated gas information may be performed for each batch of batch treatment by the carbon dioxide recovery unit and the carbon compound synthesis unit in association, or may be performed for each predetermined processing time (for example, one hour, two hours, one day, one week, and the like) in association. The time required for the batch treatment and the predetermined processing time correspond to the first required time and the second required time. The type of the power supply source that supplies electric power to each unit within the first required time and the second required time can be selected as instructed by an operator. As a result, based on the type of the selected power supply source, a carbon dioxide emission amount required for at least one of the carbon dioxide concentration and the carbon compound synthesis can be calculated.

Hereinafter, embodiments of the carbon dioxide emission amount calculation device, the computer program, and the carbon dioxide emission amount calculation method will be described with reference to the drawings.

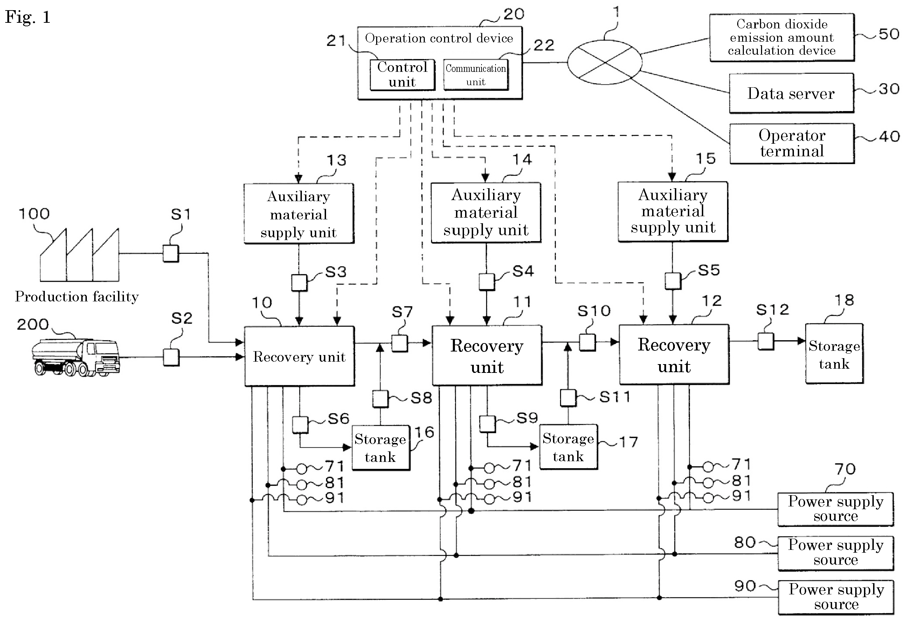

Fig. 1 is a diagram illustrating an example of a configuration of an operation control system of a carbon compound production facility. The operation control system includes an operation control device 20 and a carbon dioxide emission amount calculation device 50. The operation control device 20 and the carbon dioxide emission amount calculation device 50 are connected via a communication network 1. A data server 30 and an operator terminal 40 are connected to the communication network 1.

The carbon compound production facility includes a recovery unit (carbon dioxide recovery unit) 10, synthesis units (carbon compound synthesis units) 11 and 12, auxiliary material supply units 13, 14, and 15, storage tanks 16, 17, and 18, and sensors S1 to S12.

A production facility 100 is a facility such as a factory, and discharges exhaust gas containing carbon dioxide accompanying production of products (including batteries, power supply devices, lighting devices, and the like). The exhaust gas containing carbon dioxide discharged from the production facility 100 is measured for exhaust gas information such as composition, concentration, temperature, and flow rate by the sensor S1, and is then sent to the recovery unit 10. The exhaust gas transported by a transport vehicle 200 such as a tank lorry is measured for exhaust gas information such as composition, concentration, temperature, and flow rate by the sensor S2, and is then sent to the recovery unit 10.

The recovery unit 10 is a unit that recovers carbon dioxide in the exhaust gas, and the carbon dioxide is concentrated and recovered under conditions suitable for the sent exhaust gas. The recovery of carbon dioxide may be performed using a chemical adsorption method, a physical adsorption method, a membrane separation method, or an electrochemical method. The chemical absorption method is a method of recovering carbon dioxide by absorbing it into an alkaline solution such as an amine or an aqueous potassium carbonate solution. The physical adsorption method is a method of recovering carbon dioxide using an adsorbent such as zeolite or activated carbon, and adsorbing only carbon dioxide from combustion exhaust gas that comes into contact with the adsorbent. After adsorption, desorption is performed to restore the adsorption performance. Examples of the restoration include a pressure swing adsorption (PSA) method and a thermal swing adsorption (TSA) method. The membrane separation method is a method of recovering carbon dioxide by passing the combustion exhaust gas through a porous membrane and separating carbon dioxide utilizing a difference in gas permeation rate. The electrochemical method is a method of recovering carbon dioxide electrochemically using an electrolytic cell described later, and is preferable because it can be relatively easily miniaturized. An auxiliary material supply unit 13 supplies, as necessary, auxiliary materials required for carbon dioxide recovery to the recovery unit 10 at the time of recovering carbon dioxide. When supplying the auxiliary materials, the composition, temperature, and supply amount of the auxiliary materials are measured by the sensor S3, and an appropriate amount of auxiliary materials is supplied to the recovery unit 10.

The gas in which carbon dioxide is concentrated (carbon dioxide concentrated gas) recovered by the recovery unit 10 may be measured for the composition, the concentration or the ratio of each component, and the temperature of the gas by the sensor S6, and then stored in the storage tank 16, or the gas in which carbon dioxide is concentrated recovered by the recovery unit 10 may be measured for concentrated gas information such as the composition of the gas, the concentration or the ratio of each component, and the temperature of the gas by the sensor S7, and then sent to the synthesis unit 11. The gas (the gas in which carbon dioxide is concentrated) stored in the storage tank 16 may be measured for concentrated gas information such as the composition, concentration or ratio of each component, and temperature by the sensor S8, and then sent to the synthesis unit 11, or may be transported to a demand site by a tank lorry or the like.

The synthesis unit 11 is a synthesis unit that synthesizes a carbon compound, and synthesizes a carbon compound A using a gas in which carbon dioxide sent from the recovery unit 10 or the storage tank 16 is concentrated. In the present specification, the carbon compound is a carbon compound that is synthesized using carbon dioxide as one of raw materials. The carbon compound A includes methanol and carbon monoxide. The auxiliary material supply unit 14 supplies, as necessary, auxiliary materials required for synthesis of the carbon compound to the synthesis unit 11 at the time of synthesizing the carbon compound. When supplying the auxiliary materials, the composition, temperature, and supply amount of the auxiliary materials are measured by the sensor S4, and an appropriate amount of auxiliary materials is supplied to the synthesis unit 11.

The carbon compound synthesized by the synthesis unit 11 may be measured for carbon compound information such as composition, concentration of each component or ratio of each component, and temperature by the sensor S9, and then stored in the storage tank 17, or the carbon compound synthesized by the synthesis unit 11 may be measured for carbon compound information such as composition, concentration of each component or ratio of each component, and temperature by the sensor S10, and then sent to the synthesis unit 12. The carbon compound stored in the storage tank 17 may be measured for carbon compound information such as composition, concentration of each component or ratio of each component, and temperature by the sensor S11, and then sent to the synthesis unit 12, or may be transported to a demand site by a tank lorry or the like.

The synthesis unit 12 is a synthesis unit of a carbon compound, and synthesizes a carbon compound B using the carbon compound A sent from the synthesis unit 11 or the storage tank 17. The carbon compound B contains methane. The auxiliary material supply unit 15 supplies, as necessary, auxiliary materials required for synthesis of the carbon compound to the synthesis unit 12 at the time of synthesizing the carbon compound. When supplying the auxiliary materials, the composition, temperature, and supply amount of the auxiliary materials are measured by the sensor S5, and an appropriate amount of auxiliary materials is supplied to the synthesis unit 12. The carbon compound synthesized by the synthesis unit 12 is measured for composition, concentration of each component or ratio of each component, and temperature by the sensor S12, and then stored in the storage tank 18. The carbon compound stored in the storage tank 18 is transported to a demand site by a tank lorry or the like.

The recovery unit 10 and the synthesis units 11 and 12 can receive electric power from a plurality of power supply sources (in the example of the drawings, three types of power supply sources 70, 80, and 90 are illustrated). Specifically, among the plurality of power supply sources, an appropriate power supply source can be switched depending on the time zone, day of the week, and the like, and electric power can be supplied from the switched power supply source to each of the recovery unit 10 and the synthesis units 11 and 12. The electric power supplied to the recovery unit 10 and the synthesis units 11 and 12 can be measured by power meters 71, 81, and 91 respectively provided for each type of power supply source.

The types of power supply sources include a commercial power source, a solar power generation facility, a gas turbine power generation facility, and a gas power generation facility. The solar power generation facility, the gas turbine power generation facility, and the gas power generation facility are so-called self-generation facilities, and can be installed within the premises where the carbon compound production facility is installed.

The operation control device 20 includes a control unit 21 and a communication unit 22.

The communication unit 22 includes a communication module and transmits required information to the data server 30 via the communication network 1. The required information includes information related to the operation of the carbon compound production facility. The required information includes exhaust gas information, concentrated gas information, carbon compound synthesis information, and electric power information measured by the sensors S1, S2, S6 to S8, and S9 to S12, and the like. In the data server 30, the required information is stored in association with each other. The data server 30 can store, in association, the exhaust gas information of the exhaust gas supplied to the recovery unit 10 and the concentrated gas information of carbon dioxide concentrated gas supplied to the synthesis unit 11. The communication unit 22 may transmit the above-described necessary information to the carbon dioxide emission amount calculation device 50.

The control unit 21 includes a controller, a memory, and the like, and controls the operation of the carbon compound production facility. The control unit 21 controls the operation of the recovery unit 10 and the synthesis units 11 and 12, and also controls, as necessary, the operation of the auxiliary material supply units 13, 14, and 15.

The data server 30 has a function as a first storage unit, and stores, in association, exhaust gas information of exhaust gas supplied to the recovery unit 10, concentrated gas information of carbon dioxide concentrated gas supplied to the synthesis unit 11, and electric power information. The data server 30 may store, in association, the concentrated gas information of the carbon dioxide concentrated gas supplied to the synthesis unit 11, the carbon compound information of the carbon compound synthesized by the synthesis unit 11, and electric power information. The data server 30 has a function as a second storage unit, and stores electric power information including a ratio of the carbon dioxide emission amount to the supplied electric power amount for each type of the power supply sources 70, 80, and 90. Details of the electric power information will be described later. As illustrated in Fig. 1, the data server 30 may be configured as a separate device from the carbon dioxide emission amount calculation device 50, or may be configured to be incorporated in the carbon dioxide emission amount calculation device 50.

The carbon compound includes methane (CH₄), methanol (CH₃OH), ethane (C₂H₆), ethylene (C₂H₄), ethanol (C₂H₅OH), carbon monoxide (CO), and the like.

The operator terminal 40 accepts selection or input of calculation conditions when calculating a carbon dioxide emission amount, and outputs the accepted selection or input to the carbon dioxide emission amount calculation device 50. The calculation conditions allow selection of whether supply (input) of exhaust gas to the recovery unit 10 is performed in batch units or continuously. The calculation conditions also allow selection of the power supply sources for supplying electric power to the recovery unit 10 and the synthesis units 11 and 12 together with time zones.

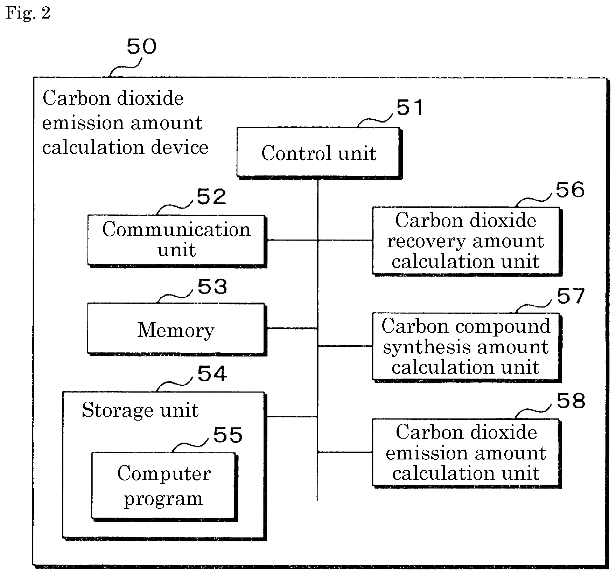

Fig. 2 is a diagram illustrating an example of a configuration of the carbon dioxide emission amount calculation device 50. The carbon dioxide emission amount calculation device 50 includes a control unit 51 that controls the entire device, a communication unit 52, a memory 53, a storage unit 54, a carbon dioxide recovery amount calculation unit 56, a carbon compound synthesis amount calculation unit 57, and a carbon dioxide emission amount calculation unit 58.

The control unit 51 may be configured by incorporating a required number of central processing units (CPUs), micro-processing units (MPUs), graphics processing units (GPUs), and the like. The control unit 51 may be configured by combining digital signal processors (DSPs), field-programmable gate arrays (FPGAs), and the like.

The communication unit 52 includes a communication module and has a function of performing communication with the operation control device 20, the data server 30, and the operator terminal 40. The communication unit 52 can acquire necessary information such as exhaust gas information of exhaust gas, concentrated gas information of carbon dioxide concentrated gas, and carbon compound information from the data server 30.

The storage unit 54 can be configured with a hard disk or a semiconductor memory, and stores a computer program 55 (program product) and required information.

The computer program 55 is a program that operates on the carbon dioxide emission amount calculation device 50, and may be downloaded from an external device via the communication unit 52 and stored in the storage unit 54, or may be read by a recording medium reading unit from a recording medium (for example, an optically readable disc storage medium such as a CD-ROM) on which the computer program 55 is recorded, and stored in the storage unit 54.

The memory 53 can be configured by a semiconductor memory such as a static random access memory (SRAM), a dynamic random access memory (DRAM), or a flash memory. The computer program 55 is loaded into the memory 53 so that the control unit 51 can execute the computer program 55. The control unit 51 can execute processing defined by the computer program 55. That is, the processing performed by the control unit 51 is also the processing by the computer program 55.

The carbon dioxide recovery amount calculation unit 56 calculates a carbon dioxide amount (a first carbon dioxide amount) contained in exhaust gas supplied (input) to the recovery unit 10. The carbon dioxide recovery amount calculation unit 56 calculates a carbon dioxide amount (a second carbon dioxide amount) contained in carbon dioxide concentrated gas converted from the exhaust gas by the recovery unit 10.

The carbon compound synthesis amount calculation unit 57 calculates a synthesis amount of a carbon compound synthesized by the synthesis unit 11. The carbon compound synthesis amount calculation unit 57 may also calculate a synthesis amount of a carbon compound synthesized by the synthesis unit 12.

The carbon dioxide emission amount calculation unit 58 calculates a carbon dioxide amount emission amount required for carbon dioxide concentration and a carbon dioxide amount emission amount required for carbon compound synthesis. Details of the calculation of the carbon dioxide amount emission amount will be described later.

The carbon dioxide recovery amount calculation unit 56, the carbon compound synthesis amount calculation unit 57, and the carbon dioxide emission amount calculation unit 58 may be configured by hardware, or may be configured by software (processing by the computer program 55).

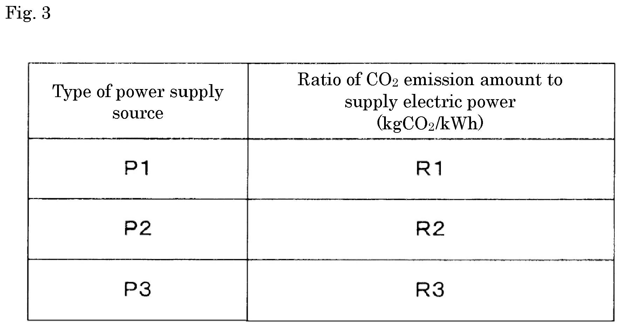

Fig. 3 is a diagram illustrating an example of electric power information. The electric power information is information in which a ratio of the carbon dioxide emission amount to the supplied electric power amount is associated for each type of power supply source. In the example of Fig. 3, for convenience, the types of power supply sources are represented by reference numerals P1 to P3, and ratios of carbon dioxide emission amount to supplied electric power corresponding to the respective types P1 to P3 are represented by reference numerals R1 to R3. That is, in a case where electric power from the power supply source P1 is used, the ratio of the carbon dioxide emission amount to the supplied electric power is R1. When an electric power amount supplied during operation of the recovery unit 10 and the synthesis units 11 and 12 is represented as W1, the amount of carbon dioxide emitted by the operation can be obtained as W1 × R1. The same applies to other power supply sources.

Next, a calculation method of a carbon dioxide amount emission amount required for carbon dioxide concentration and a carbon dioxide amount emission amount required for carbon compound synthesis will be described. The calculation of the carbon dioxide amount emission amount is roughly classified into two cases: (1) a case where exhaust gas is supplied from a tank lorry 200 and is not supplied from the production facility 100, that is, a case where carbon dioxide concentration and carbon compound synthesis are performed in batch units (batch treatment), and (2) a case where the exhaust gas is continuously supplied from the production facility 100 (including a case where exhaust gas is simultaneously supplied from the tank lorry 200), and continuous treatment is performed in which carbon dioxide concentration and carbon compound synthesis are continuously carried out. First, the case of batch treatment will be described. In the following, the recovery unit 10 and the synthesis unit 11 are described; however, the same applies to the synthesis unit 12.

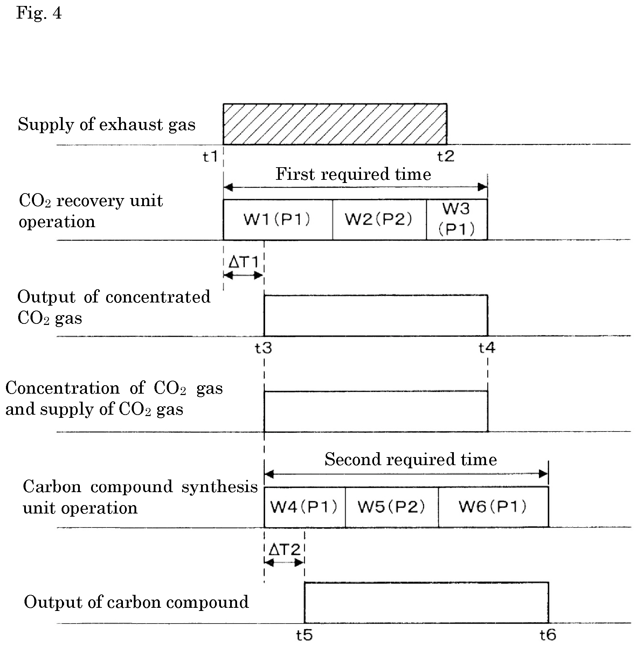

Fig. 4 is a diagram illustrating an example of a timeline of carbon dioxide concentration and carbon compound synthesis in the case of batch treatment. As illustrated in Fig. 4, the timeline represents, in order from the top, the supply (input) of the exhaust gas, the operation (driving) of the recovery unit 10, the output of the carbon dioxide concentrated gas from the recovery unit 10, the supply of the carbon dioxide concentrated gas, the operation (driving) of the synthesis unit 11, and the output of the carbon compound from the synthesis unit 11.

It is assumed that the exhaust gas is supplied to the recovery unit 10 between a time t1 and a time t2. The recovery unit 10 performs processing of recovering (concentrating the carbon dioxide) carbon dioxide from the supplied exhaust gas (batch) starting from the time t1, and it is assumed that the processing is completed after a first required time. The first required time can be specified based on exhaust gas information, specifically, based on the time during which the exhaust gas is supplied. The electric power amounts and the power supply sources that the recovery unit 10 receives during the first required time are represented as W1 (P1), W2 (P2), and W3 (P1). The power supply source P1 is a commercial power source, and the power supply source P2 is a solar power generation facility.

The recovery unit 10 outputs a carbon dioxide concentrated gas during a period from a time t3, which is after an elapsed time ΔT1 from the time t1, to a time t4 (the end of the processing), and the output carbon dioxide concentrated gas is supplied to the synthesis unit 11. The time difference ΔT1 may be zero.

The synthesis unit 11 performs processing of synthesizing a carbon compound from the supplied carbon dioxide concentrated gas (batch) starting from the time t3, and it is assumed that the processing is completed after a second required time. The second required time can be specified based on the concentrated gas information, specifically, the time during which the carbon dioxide concentrated gas is supplied to the synthesis unit 11. The electric power amounts and the power supply sources that the synthesis unit 11 receives during the second required time are represented as W4 (P1), W5 (P2), and W6 (P1).

The synthesis unit 11 synthesizes a carbon compound and outputs the carbon compound during a period from the time t5, which is after an elapsed time ΔT2 from the time t3, to the time t6 (the end of the processing). The time difference ΔT2 may be zero.

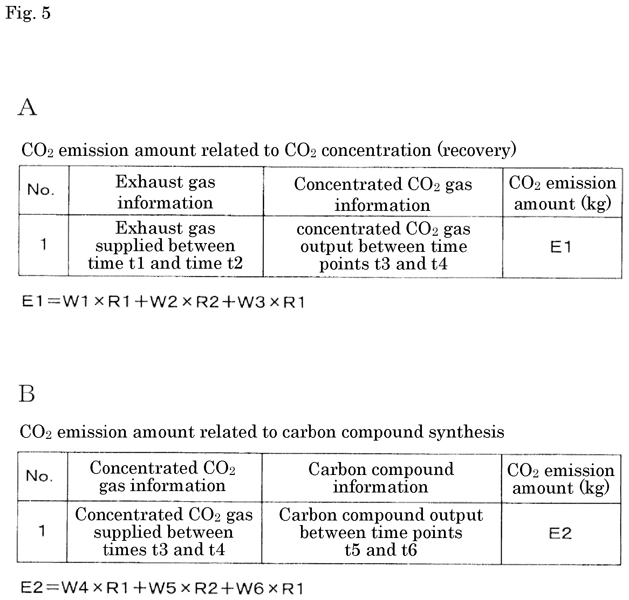

Fig. 5 is a diagram illustrating an example of a calculation method of a carbon dioxide emission amount in the case of batch treatment. The calculation method illustrated in Fig. 5 is based on the timeline illustrated in Fig. 4. Fig. 5A shows a carbon dioxide emission amount required for carbon dioxide concentration by the recovery unit 10. In the data server 30, the exhaust gas information and the carbon dioxide concentrated gas information obtained from the operation control device 20 are stored in association with each other. The exhaust gas information is information on the exhaust gas supplied to the recovery unit 10 during a period from the time t1 to the time t2. The exhaust gas information includes the composition, concentration, temperature, and flow rate of the exhaust gas, the time during which the exhaust gas is supplied, and the like. The carbon dioxide concentrated gas information is information on the carbon dioxide concentrated gas output from the recovery unit 10 during a period from the time t3 to the time t4. When the carbon dioxide concentrated gas output from the recovery unit 10 is directly supplied to the synthesis unit 11, the carbon dioxide concentrated gas information output from the recovery unit 10 during a period from the time t3 to the time t4 is also information on the carbon dioxide concentrated gas supplied to the synthesis unit 11 during a period from the time t3 to the time t4.

A carbon dioxide emission amount E1 required for carbon dioxide concentration by the recovery unit 10 can be expressed by the following formula: E1 = W1 × R1 + W2 × R2 + W3 × R1. R1 and R2 are ratios of carbon dioxide emission amount to the supplied electric power corresponding to the power supply sources P1 (for example, a commercial power source) and P2 (for example, a solar power generation facility), respectively (see Fig. 3). In a case where the electric power supply by the solar power generation facility is considered to emit no carbon dioxide (that is, R2 = 0), the carbon dioxide emission amount E1 can be expressed as (W1 + W3) × R1.

Fig. 5B illustrates a carbon dioxide emission amount required for carbon compound synthesis by the synthesis unit 11. In the data server 30, the carbon dioxide concentrated gas information (concentrated gas information) and carbon compound information obtained from the operation control device 20 are stored in association with each other. The carbon dioxide concentrated gas information is information on the carbon dioxide concentrated gas supplied to the synthesis unit 11 during a period from the time t3 to the time t4. The carbon dioxide concentrated gas information includes the composition, concentration, temperature, and flow rate of the carbon dioxide concentrated gas, and the time during which the carbon dioxide concentrated gas is supplied. The carbon compound information is information on the carbon compound output from the synthesis unit 11 during a period from the time t5 to the time t6.

A carbon dioxide emission amount E2 required for carbon compound synthesis by the synthesis unit 11 can be expressed by the following formula: E2 = W4 × R1 + W5 × R2 + W6 × R1. R1 and R2 are ratios of carbon dioxide emission amount to the supplied electric power corresponding to the power supply sources P1 (for example, a commercial power source) and P2 (for example, a solar power generation facility), respectively (see Fig. 3). In a case where the electric power supply by the solar power generation facility is considered to emit no carbon dioxide (that is, R2 = 0), the carbon dioxide emission amount E2 can be expressed as (W4 + W6) × R1.

Next, a case of continuous treatment in which carbon dioxide concentration and carbon compound synthesis are continuously performed will be described.

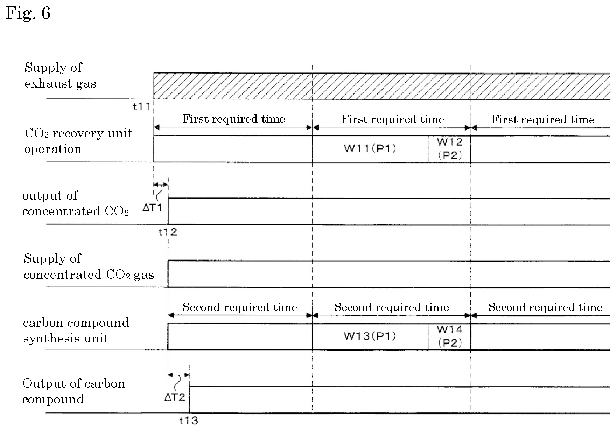

Fig. 6 is a diagram illustrating an example of a timeline of carbon dioxide concentration and carbon compound synthesis in the case of continuous treatment. Similar to the case of Fig. 4, the timeline represents, in order from the top, the supply (input) of the exhaust gas, the operation (driving) of the recovery unit 10, the output of the carbon dioxide concentrated gas from the recovery unit 10, the supply of the carbon dioxide concentrated gas, the operation (driving) of the synthesis unit 11, and the output of the carbon compound from the synthesis unit 11.

It is assumed that the exhaust gas is continuously supplied to the recovery unit 10 from a time t11. Although not illustrated in the drawings, in a case where the exhaust gas is continuously supplied, there may be irregular periods during which the exhaust gas is not supplied. The recovery unit 10 performs processing of continuously recovering (concentrating) carbon dioxide from the supplied exhaust gas starting from the time t11. In this case, the operation (driving) period of the recovery unit 10 is divided into predetermined periods (referred to as the first required time in the example of Fig. 6). The predetermined period may be one hour, two hours, one day, one week, or the like. That is, in this case, the first required time can be set in advance. One of the plurality of predetermined periods is focused on. As illustrated in Fig. 6, the electric power amounts and power supply sources that the recovery unit 10 receives during the focused predetermined period are represented as W11(P1) and W12(P2). The power supply source P1 is a commercial power source, and the power supply source P2 is a solar power generation facility.

The recovery unit 10 outputs a carbon dioxide concentrated gas continuously during a period from a time t12, which is after an elapsed time ΔT1 from the time t11, and the output carbon dioxide concentrated gas is supplied to the synthesis unit 11. The time difference ΔT1 may be zero.

The synthesis unit 11 performs processing of synthesizing a carbon compound from the continuously supplied carbon dioxide concentrated gas. In this case, the operation (driving) period of the synthesis unit 11 is divided into predetermined periods (referred to as the second required time in the example of Fig. 6). The predetermined period is similar to the predetermined period of the recovery unit 10. That is, in this case, the second required time can be set in advance. In the predetermined period corresponding to the same time period as the predetermined period focused on for the recovery unit 10, the electric power amounts and power supply sources that the synthesis unit 11 receives are represented as W13(P1) and W14(P2). The power supply source P1 is a commercial power source, and the power supply source P2 is a solar power generation facility.

The synthesis unit 11 continuously outputs a carbon compound during a period from time t13, which is after an elapsed time ΔT2 from the time t12. The same applies to other predetermined periods.

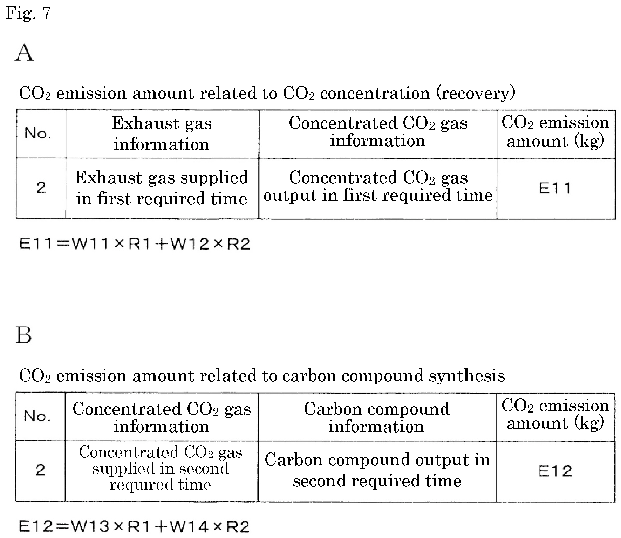

Fig. 7 is a diagram illustrating an example of a calculation method of a carbon dioxide emission amount in the case of continuous treatment. The calculation method illustrated in Fig. 7 is based on the timeline illustrated in Fig. 6. Fig. 7A shows a carbon dioxide emission amount required for carbon dioxide concentration by the recovery unit 10. In the data server 30, the exhaust gas information and the carbon dioxide concentrated gas information obtained from the operation control device 20 are stored in association with each other. The exhaust gas information is information on the exhaust gas supplied to the recovery unit 10 during the first required time (predetermined period) illustrated in Fig. 6. The carbon dioxide concentrated gas information is information on the carbon dioxide concentrated gas output from the recovery unit 10 during the first required time.

A carbon dioxide emission amount E11 required for carbon dioxide concentration by the recovery unit 10 can be expressed by the following formula: E11 = W11 × R1 + W12 × R2. R1 and R2 are ratios of carbon dioxide emission amount to the supplied electric power corresponding to the power supply sources P1 (for example, a commercial power source) and P2 (for example, a solar power generation facility), respectively (see Fig. 3). In a case where the electric power supply by the solar power generation facility is considered to emit no carbon dioxide (that is, R2 = 0), the carbon dioxide emission amount E11 can be expressed as W11 × R1. The same applies to the other first required times.

Fig. 7B illustrates a carbon dioxide emission amount required for carbon compound synthesis by the synthesis unit 11. In the data server 30, the carbon dioxide concentrated gas information and the carbon compound information obtained from the operation control device 20 are stored in association with each other. The carbon dioxide concentrated gas information is information on the carbon dioxide concentrated gas supplied to the synthesis unit 11 during the second required time (predetermined period) illustrated in Fig. 6. The carbon compound information is information on the carbon compound output from the synthesis unit 11 during the second required period.

A carbon dioxide emission amount E12 required for carbon compound synthesis by the synthesis unit 11 can be expressed by the following formula:
E12 = W13 × R1 + W14 × R2. R1 and R2 are ratios of carbon dioxide emission amount to the supplied electric power corresponding to the power supply sources P1 (for example, a commercial power source) and P2 (for example, a solar power generation facility), respectively (see Fig. 3). In a case where the electric power supply by the solar power generation facility is considered to emit no carbon dioxide (that is, R2 = 0), the carbon dioxide emission amount E12 can be expressed as W13 × R1. The same applies to the other second required time.

As described above, the control unit 51 (carbon dioxide emission amount calculation unit 58) of the carbon dioxide emission amount calculation device 50 acquires the exhaust gas information of the exhaust gas supplied to the recovery unit 10, specifies, based on the acquired exhaust gas information, a first required time required for the recovery unit 10 to convert the supplied exhaust gas into a carbon dioxide concentrated gas, and calculates, based on electric power information regarding electric power supplied to the recovery unit 10 during the first required time, a carbon dioxide emission amount required for carbon dioxide concentration.

In a case where the exhaust gas is supplied to the recovery unit 10 as single batch treatment, the first required time can be a time required for treatment of the batch (carbon dioxide recovery processing). In a case where the exhaust gas is continuously supplied to the recovery unit 10, the first required time can be a predetermined time (for example, one hour, two hours, one day, one week, or the like). As a result, a carbon dioxide emission amount required for carbon dioxide concentration, that is, a carbon dioxide emission amount at the time of recovering carbon dioxide from exhaust gas, can be ascertained. When the processing amount in the former batch treatment is large, the carbon dioxide emission amount may be ascertained in the same manner as in the latter continuous processing case.

The control unit 51 (carbon dioxide emission amount calculation unit 58) may acquire concentrated gas information of carbon dioxide concentrated gas supplied to the synthesis unit 11, specify, based on the acquired concentrated gas information, a second required time for the synthesis unit 11 to convert the supplied carbon dioxide concentrated gas into a carbon compound, and calculate, based on electric power information regarding electric power supplied to the synthesis unit 11 during the second required time, a carbon dioxide emission amount required for carbon compound synthesis.

In a case where the exhaust gas is supplied to the recovery unit 10 as a single batch treatment and the carbon dioxide concentrated gas output from the recovery unit 10 is supplied to the synthesis unit 11, the second required time can be a time required for the processing of the batch treatment (carbon compound synthesis). In a case where the exhaust gas is continuously supplied to the recovery unit 10, and the carbon dioxide concentrated gas output from the recovery unit 10 is supplied to the synthesis unit 11, the second required time can be a predetermined time (for example, one hour, two hours, one day, or one week). As a result, a carbon dioxide emission amount required for carbon compound synthesis can be ascertained.

The control unit 51 (carbon dioxide recovery amount calculation unit 56) may acquire the concentrated gas information of the carbon dioxide concentrated gas converted from the exhaust gas by the recovery unit 10 and calculate, based on the acquired concentrated gas information and the exhaust gas information of the exhaust gas supplied to the recovery unit 10, a carbon dioxide emission amount required for carbon dioxide concentration.

The exhaust gas information includes a composition of the exhaust gas (such as carbon dioxide, oxygen, nitrogen, or the like), a concentration of each component (for example, an average concentration), a flow rate (for example, an average flow rate), and the like. The concentrated gas information includes a carbon dioxide concentration (for example, an average concentration) and a flow rate (for example, an average flow rate), and the like. As a result, a carbon dioxide emission amount required for carbon dioxide concentration, that is, carbon dioxide amounts contained respectively in the exhaust gas and in the carbon dioxide concentrated gas, can be known, and therefore a carbon dioxide emission amount at the time of recovering carbon dioxide from the exhaust gas can be accurately ascertained.

More specifically, the control unit 51 (carbon dioxide recovery amount calculation unit 56) may calculate a first carbon dioxide amount contained in the supplied exhaust gas based on the exhaust gas information, calculate a second carbon dioxide amount contained in the carbon dioxide concentrated gas based on the concentrated gas information, and calculate, based on the calculated first carbon dioxide amount and second carbon dioxide amount, a carbon dioxide emission amount required for carbon dioxide concentration.

Based on the exhaust gas information, assuming that the average concentration of the carbon dioxide contained in the exhaust gas is 40.01 g/Nm³, the average flow rate is 20 Nm³/min, and the first required time of the recovery unit 10 is 120 min, the carbon dioxide amount contained in the exhaust gas (first carbon dioxide amount) is calculated as follows: 40.01 g/Nm³ × 120 min × 20 Nm³/min = 96024 g = 96.024 kg. From the concentrated gas information, when the average concentration of the carbon dioxide contained in the carbon dioxide concentrated gas is 400 g/Nm³, the average flow rate is 2 Nm³/min, and the first required time of the recovery unit 10 is 120 min, the carbon dioxide amount (second carbon dioxide amount) contained in the carbon dioxide concentrated gas is 400 g/Nm³ × 120 min × 2Nm³/min = 96000 g = 96 kg.

As described above, in a case where the first carbon dioxide amount > the second carbon dioxide amount, the difference (the first carbon dioxide amount - the second carbon dioxide amount) may be added as a carbon dioxide emission amount required for carbon dioxide concentration. In the above numerical example, 96.024 kg - 96 kg = 0.024 kg. As a result, a carbon dioxide emission amount at the time of recovering carbon dioxide from the exhaust gas can be accurately ascertained. The first carbon dioxide amount > the second carbon dioxide amount is caused by gas leakage to the outside of the system in the concentration step, non-adhesion to the recovery unit equipment due to carbonization, and the like.

It is assumed that the carbon dioxide concentrated gas output from the recovery unit 10 is immediately supplied to the synthesis unit 11. The gas amount of the carbon dioxide concentrated gas supplied to the synthesis unit 11 is 240 Nm³ (= 2 Nm³/min × 120 min), the carbon dioxide amount is 96 kg (2.18 kmol), and the average flow rate of the carbon dioxide concentrated gas is 2 Nm³/min (800g - CO₂/min). A carbon dioxide concentrated gas is sent to a cathode of an electrolytic cell to be described later provided in the synthesis unit 11, and H₂O having a molar amount of 3 times that of carbon dioxide is sent to an anode at an average flow rate of 982 g/min (= 3 times × 18 g/mol-H₂O × 800 g/min/44 g/mol - CO₂). From the carbon compound information, it is found that in a case where an aqueous solution having an average methanol concentration of 64 wt% is generated at an average flow rate of 0.91 kg/min, the amount of methanol contained in the aqueous solution is 109 kg × 0.64 = 69.8 kg (2.18 kmol), the methanol amount is the same as the number of moles of carbon dioxide contained in the carbon dioxide concentrated gas, and all the introduced carbon dioxide was used for methanol synthesis.

Next, the electrolytic cells included in the recovery unit 10 and the synthesis unit 11 will be described.

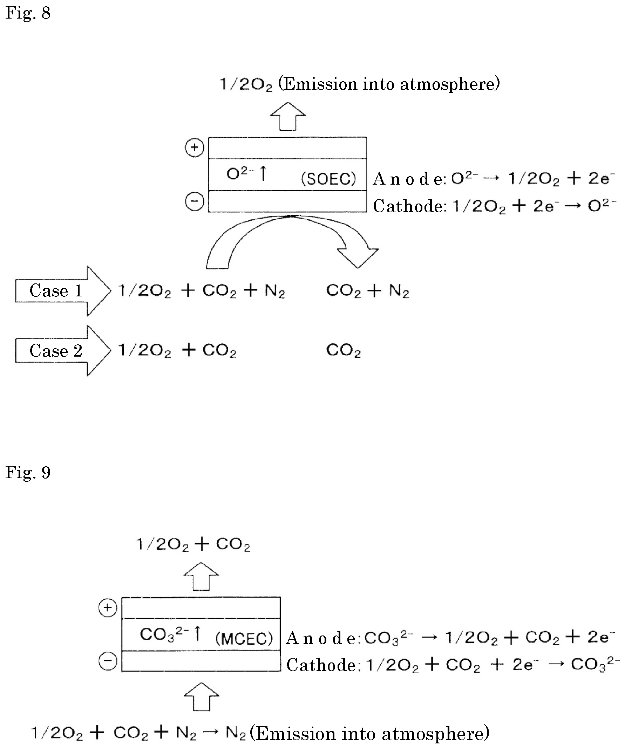

Fig. 8 is a diagram illustrating a first example of an electrolytic cell included in the recovery unit 10. The electrolytic cell (electrochemical cell) illustrated in Fig. 8 is a solid oxide electrolytic cell (SOEC). In a case where the composition of the exhaust gas consists of carbon dioxide, oxygen, and nitrogen, and the nitrogen content is relatively low, the exhaust gas is introduced into the cathode of the electrolytic cell (SOEC) using yttria-stabilized zirconia as the electrolyte. According to the reaction formula in Case 1 illustrated in Fig. 8, oxygen is reduced to oxygen ions (O²⁻) at the cathode and is transported to the anode. Thus, oxygen at the cathode is removed or its concentration is reduced. As a result, concentrated gas of the carbon dioxide with a low oxygen concentration but still containing nitrogen is discharged from the cathode. In a case where the oxygen concentration is not sufficiently reduced, the gas discharged from the cathode may simply be reintroduced into the cathode of the electrolytic cell. Case 2 will be described later.

Fig. 9 is a diagram illustrating a second example of an electrolytic cell included in the recovery unit 10. The electrolytic cell (electrochemical cell) shown in Fig. 9 is a molten carbonate electrolytic cell (MCEC). In a case where the composition of the exhaust gas is carbon dioxide, oxygen, and nitrogen and the nitrogen content is relatively high, an MCEC using a molten carbonate electrolyte is employed, and the exhaust gas is introduced to the cathode of the electrolytic cell (MCEC). According to the reaction formula illustrated in Fig. 9, oxygen and carbon dioxide receive electrons at the cathode, and move in the electrolyte as CO₃²⁻ ions, and again become oxygen and carbon dioxide at the anode. By removing nitrogen, carbon dioxide is concentrated at the anode. In a case where it is desired to remove oxygen or reduce the concentration of oxygen in the concentrated gas, the concentrated gas is introduced into the cathode of the electrolytic cell (SOEC) illustrated in Fig. 8. The oxygen concentration can be reduced according to the reaction formula of Case 2 in Fig. 8.

As described above, in a case where carbon dioxide is electrochemically concentrated and recovered using the MCEC, it is preferable that the molar ratio of oxygen (O₂) to carbon dioxide (CO₂) be 1:2. If the oxygen amount is lower than one-half of the carbon dioxide on a molar basis, part of the carbon dioxide reacts with oxygen to form CO₃²⁻ ions that cannot migrate through the electrolyte, resulting in a gas discharged into the atmosphere from the cathode that contains a large amount of carbon dioxide. Accordingly, in a case where the oxygen concentration in the exhaust gas supplied to the electrolytic cell is one-half or less of that of the carbon dioxide, introducing oxygen gas or air containing oxygen from the auxiliary material supply unit 13 to the recovery unit 10 can prevent the release of carbon dioxide into the atmosphere. In a case where the oxygen amount is one-half or more of the carbon dioxide on a molar basis, the carbon dioxide concentration becomes low, and the reaction rate of carbon dioxide may decrease. In such a case, it is preferable to recover the carbon dioxide using the MCEC after reducing the oxygen amount using the SOEC illustrated in Fig. 8.

The recovery unit 10 may be provided, in addition to the electrolytic cell, with a device employing a chemical absorption method, a physical adsorption method, a membrane separation method, or a cryogenic separation method. It may also be provided with a device combining these methods. As a result, the concentrated gas of the carbon dioxide having a high concentration can be obtained.

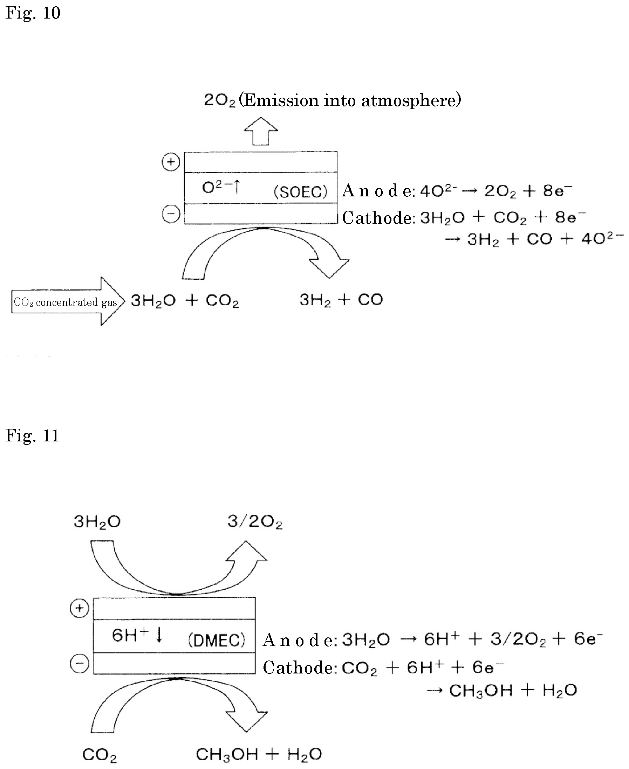

Fig. 10 is a diagram illustrating a first example of an electrolytic cell included in the synthesis unit 11. The electrolytic cell (electrochemical cell) illustrated in Fig. 10 is a solid oxide electrolytic cell (SOEC). In the example of Fig. 10, the carbon monoxide is synthesized at the cathode of the electrolytic cell. The carbon dioxide concentrated gas recovered by the recovery unit 10 is sent to the cathode of the electrolytic cell provided in the synthesis unit 11 after measuring the composition, the ratio of the compositions, the gas concentration, and the like by the sensor S7. Here, the carbon dioxide concentrated gas is assumed to be a gas having a high concentration. To the cathode of the electrolytic cell, as an auxiliary material for carbon compound synthesis, H₂O in a molar ratio of 3 times the amount of carbon dioxide is supplied from the auxiliary material supply unit 14. In an electrolytic cell (SOEC) including yttria-stabilized zirconia as an electrolyte and provided in the synthesis unit 11, water and carbon dioxide are reduced at the cathode to generate a mixed gas of hydrogen and carbon monoxide as illustrated in Fig. 11. At the anode, oxygen is generated and released into the atmosphere.

The mixed gas of hydrogen and carbon monoxide generated at the cathode of the electrolytic cell of the synthesis unit 11 is measured for the composition, the ratio of the compositions, and the gas concentration by the sensor S10, and then sent to the synthesis unit 12 provided with a methane synthesis apparatus. In the methane synthesis apparatus, methane (CH4) is synthesized according to the reaction formula 3H₂+ CO → CH4 + H2O, using a catalyst such as a nickel alloy.

Fig. 11 is a diagram illustrating a second example of an electrolytic cell included in the synthesis unit 11. The electrolytic cell (electrochemical cell) illustrated in Fig. 11 is a direct methanol electrolytic cell (DMEC) using an ion exchange membrane as an electrolyte. In the example of Fig. 11, the methanol is synthesized at the cathode of the electrolytic cell. The carbon dioxide concentrated gas recovered by the recovery unit 10 is sent to the cathode of the electrolytic cell provided in the synthesis unit 11 after measuring the composition, the ratio of the compositions, the gas concentration, and the like by the sensor S7. Here, the carbon dioxide concentrated gas is assumed to be a gas in which the concentration of the carbon dioxide is increased by a chemical adsorption method, a physical adsorption method, a membrane separation method, an electrochemical method, or the like. To the cathode of the electrolytic cell, as an auxiliary material for carbon compound synthesis, H₂O in a molar ratio of 3 times the amount is supplied from the auxiliary material supply unit 14. In the DMEC electrolytic cell using an ion exchange membrane as an electrolyte provided in the synthesis unit 11, as illustrated in Fig. 11, carbon dioxide is reduced at the cathode to generate a methanol-water mixture containing methanol (CH₃OH) and H₂O. At the anode, H₂O is oxidized to generate oxygen, which is released into the atmosphere.

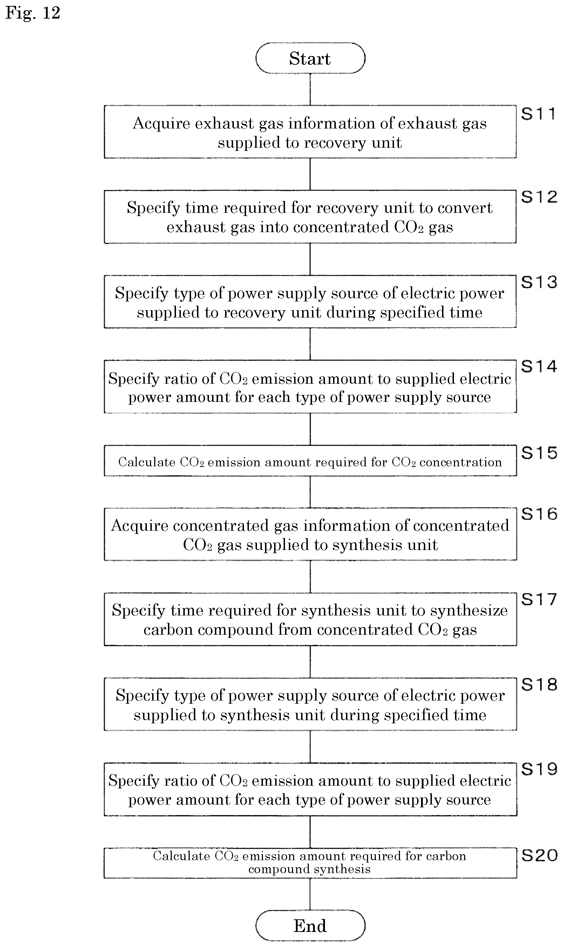

Fig. 12 is a diagram illustrating an example of processing procedure by the carbon dioxide emission amount calculation device 50. For convenience, the control unit 51 will be described as the main body of processing below. The control unit 51 acquires exhaust gas information of exhaust gas supplied to the recovery unit 10 (S11) and specifies the time required (first required time) for the recovery unit 10 to convert the exhaust gas into carbon dioxide concentrated gas (S12). The specification of the first required time may be performed based on an operator instruction input through the operator terminal 40.

The control unit 51 specifies the type of power supply source of electric power supplied to the recovery unit 10 during the identified time (S13). When specifying the type of power supply source, the control unit 51 specifies the electric power amount supplied from each specified power supply source to the recovery unit 10. The control unit 51 specifies, for each specified power supply source, the ratio of the carbon dioxide emission amount to the supplied electric power amount (S14) and calculates the carbon dioxide emission amount required for carbon dioxide concentration (S15).

The control unit 51 acquires the concentrated gas information of carbon dioxide concentrated gas supplied to the synthesis unit 11 (S16) and identifies the time required (second required time) for the synthesis unit 11 to synthesize a carbon compound from the carbon dioxide concentrated gas (S17). The specification of the second required time may be performed based on an operator instruction input through the operator terminal 40.

The control unit 51 specifies the type of power supply source of electric power supplied to the synthesis unit 11 during the identified time (S18). When specifying the type of power supply source, the control unit 51 specifies the electric power amount supplied from each specified power supply source to the synthesis unit 11. The control unit 51 specifies, for each specified power supply source, the ratio of the carbon dioxide emission amount to the supplied electric power amount (S19), calculates the carbon dioxide emission amount required for carbon compound synthesis (S20), and terminates the processing.

According to the carbon dioxide emission amount calculation device 50 of the present embodiment, it is possible to calculate the carbon dioxide emission amount at the time of electrochemically concentrating and recovering carbon dioxide contained in exhaust gas, and also the carbon dioxide emission amount at the time of electrochemically synthesizing a carbon compound based on the recovered carbon dioxide concentrated gas, thereby enabling evaluation of the environmental load of carbon dioxide. Even in a case where a plurality of types of power supply sources is used in the processing of electrochemically concentrating and recovering carbon dioxide contained in exhaust gas, or in the processing of electrochemically synthesizing a carbon compound based on the recovered carbon dioxide concentrated gas, the carbon dioxide emission amount can be easily calculated.

In the present embodiment, each function of the carbon dioxide emission amount calculation device 50 may be incorporated into the operator terminal 40.

### DESCRIPTION OF REFERENCE SIGNS

1: Communication network
10: Recovery unit
11, 12: Synthesis unit
13, 14, 15: Auxiliary material supply unit
16, 17, 18: Storage tank
20: Operation control device
21: Control unit
22: Communication unit
30: Data server
40: Operator terminal
50: Carbon dioxide emission amount calculation device
51: Control unit
52: Communication unit
53: Memory
54: Storage unit
55: Computer program
56: Carbon dioxide recovery amount calculation unit
57: Carbon compound synthesis amount calculation unit
58: Carbon dioxide emission amount calculation unit
70, 80, 90: Power supply source
71, 81, 91: Power meter

## Claims

1. A carbon dioxide emission amount calculation device comprising:
a control unit, wherein
the control unit
acquires exhaust gas information of exhaust gas supplied to a carbon dioxide recovery unit that recovers carbon dioxide contained in the exhaust gas,
specifies a first required time required for the carbon dioxide recovery unit to convert the supplied exhaust gas into a carbon dioxide concentrated gas based on the acquired exhaust gas information, and
calculates a carbon dioxide emission amount required for carbon dioxide concentration based on electric power information regarding electric power supplied to the carbon dioxide recovery unit during the first required time.

2. The carbon dioxide emission amount calculation device according to claim 1, wherein
the control unit
acquires concentrated gas information of a carbon dioxide concentrated gas converted from exhaust gas by the carbon dioxide recovery unit, and
calculates a carbon dioxide emission amount required for carbon dioxide concentration based on the acquired concentrated gas information and exhaust gas information of the exhaust gas to be supplied.

3. The carbon dioxide emission amount calculation device according to claim 2, wherein
the exhaust gas information and the concentrated gas information each include a gas concentration and a gas flow rate, and
the control unit
calculates a first carbon dioxide amount contained in the supplied exhaust gas based on the exhaust gas information,
calculates a second carbon dioxide amount contained in the carbon dioxide concentrated gas based on the concentrated gas information, and
calculates a carbon dioxide emission amount required for carbon dioxide concentration based on the calculated first carbon dioxide amount and second carbon dioxide amount.

4. The carbon dioxide emission amount calculation device according to claim 1, wherein the electric power information includes a ratio of carbon dioxide emission amount to supplied electric power amount for each type of power supply source, or a power supply amount for each power supply source to the carbon dioxide recovery unit or a carbon compound synthesis unit during a predetermined period of time.

5. The carbon dioxide emission amount calculation device according to any one of claims 1 to 4, wherein
the control unit
acquires concentrated gas information of a carbon dioxide concentrated gas supplied to a carbon compound synthesis unit that synthesizes a carbon compound,
specifies a second required time that is required for the carbon compound synthesis unit to convert the supplied carbon dioxide concentrated gas into a carbon compound based on the acquired concentrated gas information, and
calculates a carbon dioxide emission amount required for carbon compound synthesis based on electric power information regarding electric power supplied to the carbon compound synthesis unit during the second required time.

6. The carbon dioxide emission amount calculation device according to claim 5, wherein the electric power information regarding electric power supplied to the carbon compound synthesis unit during the second required time includes a ratio of carbon dioxide emission amount to a supplied electric power amount for each type of a power supply source.

7. The carbon dioxide emission amount calculation device according to claim 5, comprising:
a first storage unit that stores exhaust gas information of exhaust gas supplied to the carbon dioxide recovery unit and concentrated gas information of a carbon dioxide concentrated gas supplied to a carbon compound synthesis unit that synthesizes a carbon compound in association with each other; and
a second storage unit that stores electric power information including a ratio of a carbon dioxide emission amount to a supplied electric power amount for each type of a power supply source, wherein
the control unit
acquires at least one of a selection of a type of a power supply source during a first required time that is required for the carbon dioxide recovery unit to convert the supplied exhaust gas into a carbon dioxide concentrated gas and a selection of a type of a power supply source during a second required time that is required for the carbon compound synthesis unit to convert the supplied carbon dioxide concentrated gas into a carbon compound, and
calculates a carbon dioxide emission amount required for at least one of carbon dioxide concentration and carbon compound synthesis based on the type of the selected power supply source.

8. A computer program configured to cause a computer to execute processing of:
acquiring exhaust gas information of exhaust gas supplied to a carbon dioxide recovery unit that recovers carbon dioxide contained in the exhaust gas;
specifying a first required time required for the carbon dioxide recovery unit to convert the supplied exhaust gas into a carbon dioxide concentrated gas based on the acquired exhaust gas information; and
calculating a carbon dioxide emission amount required for carbon dioxide concentration based on electric power information regarding electric power supplied to the carbon dioxide recovery unit during the first required time.

9. A carbon dioxide emission amount calculation method comprising:
acquiring exhaust gas information of exhaust gas supplied to a carbon dioxide recovery unit that recovers carbon dioxide contained in the exhaust gas;
specifying a first required time required for the carbon dioxide recovery unit to convert the supplied exhaust gas into a carbon dioxide concentrated gas based on the acquired exhaust gas information; and
calculating a carbon dioxide emission amount required for carbon dioxide concentration based on electric power information regarding electric power supplied to the carbon dioxide recovery unit during the first required time.
